# EUROPEAN PATENT APPLICATION

(11) **EP 0 809 380 A2**
(43) Date of publication of application: **26.11.1997**
(21) Application number: 97109759.7
(22) Date of filing: 14.07.1988
(51) Int. Cl.: H04L 12/56, H04Q 11/04

(54) **Switching system for switching a fixed-length cell**

(30) Priority: 15.07.1987 JP 174603/87; 09.10.1987 JP 253661/87; 11.11.1987 JP 283249/87; 27.04.1988 JP 102512/88
(62) Divisional of application: 88111318.7
(71) Applicant: HITACHI, LTD., Chiyoda-ku, Tokyo 101 (JP)
(72) Inventor: Sakurai, Yoshito, Hitachi Maioka Daiichi, Totsuka-ku, Yokohama (JP); Ohtsuki, Kenichi, Miura-gun, Kanagawa-ken (JP); Gohara, Shinobu, Hitachi Maioka Daiichi Shataku, Totsuka-ku, Yokohama (JP); Mori, Makoto, Totsuka-ku, Yokohama (JP); Horiki, Akira, Kanazawa-ku, Yokohama (JP); Kato, Takao, Sakae-ku, Yokohama (JP); Kuwahara, Hiroshi, Kodaira-shi (JP)
(74) Representative: Altenburg, Udo, Dipl.-Phys.

(57) **Abstract**

The invention relates to a switching system for switching a fixed-length cell composed of a header section and an information section between a plurality of incoming highways and a plurality of outgoing highways based on information included in the header section of said cell. This system comprises a first storage means for storing cells received from said plurality of incoming highways which cells are switched to a destination outgoing highway of said plurality of outgoing highways, wherein a second storage means for storing information corresponding to an idle address of said first storage means is included and a control circuit for controlling the write and read operations of said first storage means corresponding to the information stored in said second storage means is comprised. This control circuit is connected to said first storage means and said second storage means, so that the information corresponding to the idle address of said first storage means is stored in said second storage means based on a read address of the first storage means from said control circuit and the information from said second storage means is outputted as a write address of said first storage means, and is provided with a third storage means for storing the information from said second storage means as a next address for writing a next cell in said first storage means. The control circuit inputs said next address to an address corresponding to said write address of said third storage means at time of writing a cell into said first storage means and outputs a read address of said first storage means based on said next address outputted from said third storage means at time of reading a cell from said first storage means.

## Description

### BACKGROUND OF THE INVENTION

The present invention relates to a switching system for switching a fixed-length cell according to the preamble of claim 1.

A versatile and economical switching system is required which is capable of integrally handling communications, not only of the bit rate (64 Kb/s) of typical telephone voice, but also of various bit rates from low-speed (several hundred b/s) data to video signal (several Mb/s) and various characteristics (bust and real time characteristics).

A promising method expected to meet this requirement is by switching all data uniformly using a fixed-length cell with a header containing routing data. The switching system disclosed in a report entitled "A study of an Integrated Line/Packet Message Channel", presented to Exchange Division 1832, National General Conference (1988) in memory of the 70th anniversary of the foundation of the Electronic Information Communications Society is an example. In this example, all communication data is transferred by use of a fixed-length block called a "cell". The switching is derived from a space switch, and in order to prevent a plurality of cells having the same address from colliding with each other in the space switch, a timed switching function is provided for each incoming highway. Further, the timed switching function includes a switching memory and a waiting buffer memory to realize a line exchange mode requiring the real time characteristic, such as telephone voice and a burst exchange mode, in which data is sent in burst fashion with some delay which may be allowed. The line exchange mode cell is handled preferentially not through a buffer memory for guaranteeing the real time characteristic, while the burst exchange mode cell is kept waiting in the buffer memory and is processed, when there is an empty time slot. Another example of the prior art is "TDM Switching System", disclosed in JP-A-59-135994. This system, though lacking an express description of the concept of handling two types of characteristics, including the line exchange mode and the burst exchange mode, is equipped with a function to replace the fixed-length cell in terms of time by use of a buffer memory. In the process, the same buffer memory is used for awaiting a cell and switching thereof. In other words, in order to realize a waiting period, the write address into the cell buffer memory is known from the header. The system comprises waiting matrix means to be stored by an address of the cell.

In the case, where a plurality of fixed-length cells are used for the switching operation, the fact that the cell addresses are not always uniformly distributed may cause the cells destined for the same address to be concentrated temporarily into an overcrowded condition or the cells to be lost by memory overflow. In the system disclosed in the report of the present applicant cited first above, a waiting buffer memory is provided for each highway, outgoing to each address to avoid such an overcrowded condition. This buffer memory is required to have a sufficient capacity to store as many cells as required to prevent overflow, and it is necessary that such a buffer memory is required for each address separately. The resulting problem of this configuration is the necessity of a great capacity of memory. The secondly cited switching system (JP-A-59-135994), on the other hand, comprises a single buffer memory for all incoming highways and a plurality of waiting matrix means for the cell addresses, respectively, to store only the addresses of the buffer memory. This construction is capable of absorbing the lack of uniformity among the cells with a comparatively small storage capacity. The periodical use of the write addresses of the buffer memory, however, makes the system with the buffer memory in logically the same state as if fixedly divided for each address. When the waiting time for a given cell of the waiting matrix exceeds a predetermined length, for example, the same write address is used to cause an overwrite of the buffer memory in spite of the fact that there still remain cells yet to be read. The cell overwritten is erased undesirably.

FR-A-2 472 254 discloses a memory managing device that is also applicable to packet switching systems. It provides the advantage that fewer memory locations are needed for equal probability of overflow. In order to achieve this advantage, a device for managing a memory is proposed, which device comprises a storage functional unit and sequencing unit. The storage functional unit is constituted by a chaining memory, three identification memories, an address memory comprising the stack of addresses of zones available in the memory to be managed, and a counter. The device disclosed in the above-mentioned patent application comprises, among others, means corresponding to those of the characterizing portion of claim 1.

EP-A-0 113 639 discloses a synchronous packet switching system for packets of fixed length. It comprises means for transforming serial packets of multiplex inputs into parallel packets. There is further provided a buffer memory for storing the packets to be switched. The system also comprises means for reconverting parallel packets into serial packets.

### SUMMARY OF THE INVENTION

Starting from this prior art, it is the object of the invention to provide a switching system for a fixed-length cell, in which system cells to be switched are not lost by overwriting of a buffer memory.

This object is achieved by a switching system having the features of claim 1. Advantageous embodiments of this system and method, respectively, are defined in the respective dependent claims.

### BRIEF DESCRIPTION OF THE DRAWINGS

Fig. 1 is a functional block diagram showing an embodiment of the present invention.

Figs. 2A to 2C are diagrams for explaining a cell construction used in the embodiment of Fig. 1.

Fig. 3 is a detailed functional block diagram showing an address pointer included in Fig. 1.

Fig. 4 is a diagram for explaining the operation of a series-parallel conversion multiplexer included in Fig. 1.

Fig. 5 is a detailed functional block diagram showing an idle address FIFO included in Fig. 1.

Fig. 6 is a functional block diagram showing another embodiment of the present invention.

Fig. 7 is a diagram for explaining the logics of the read access control in Fig. 6.

Fig. 8 is a functional block diagram showing still another embodiment of the present invention.

Fig. 9 is a diagram for explaining a cell construction used in the embodiment of Fig. 8.

Figs. 10 and 11 are diagrams for explaining a further embodiment of the present invention.

Fig. 12 is a functional block diagram showing still another embodiment of the present invention.

Fig. 13 is a detailed functional block diagram showing address FIFOs included in Fig. 12.

Fig. 14 is a diagram for explaining still another embodiment of the present invention.

Fig. 15 is a functional block diagram showing a space switch included in Fig. 14.

Fig. 16 is a functional block diagram showing still another embodiment of the present invention.

Fig. 17 is a detailed functional block diagram showing address FIFOs included in Fig. 16.

### DESCRIPTION OF THE PREFERRED EMBODIMENTS

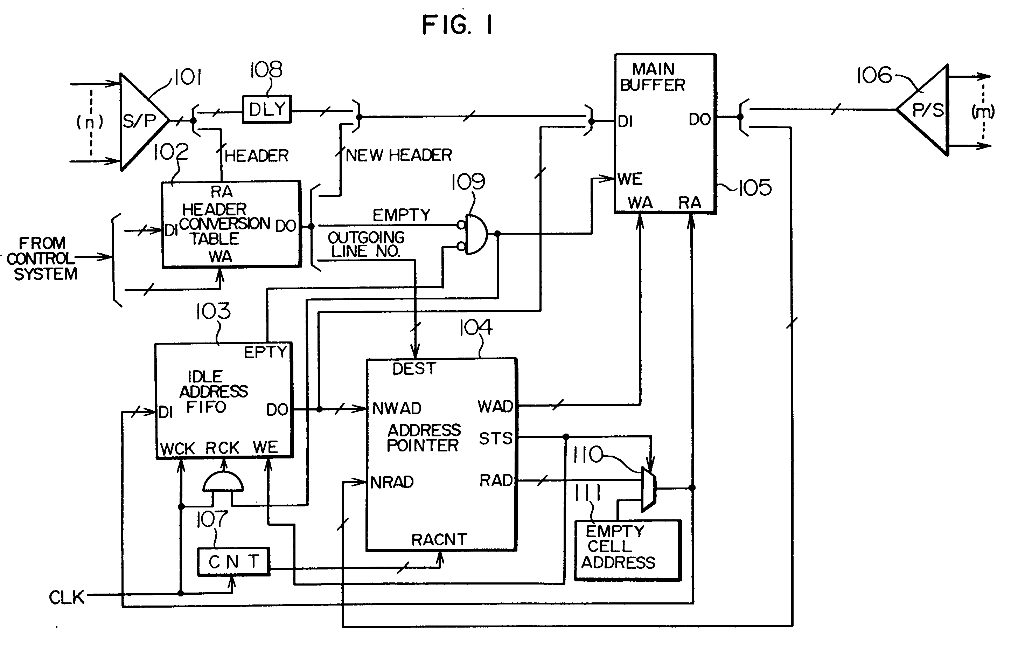

An embodiment of the present invention will be explained with reference to Fig. 1. In Fig. 1, a number n of incoming lines are connected through a series-parallel conversion multiplexer 101 to a data input (DI) of a main buffer 105. The data output (DO) of the main buffer 105 is connected to a parallel-series conversion multiplex separator and is separated into a number m of outgoing lines. The output portion of the series-parallel conversion multiplexer 101, which corresponds to the cell header, is connected to a read address terminal (RA) of a header conversion table 102. The data output (DO) portion of the header conversion table 102 which corresponds to a new header, on the other hand, is connected to the data input of the main buffer 105, the portion thereof corresponding to an empty/busy data (0 for empty) connected through an AND gate 109 to a write enable input (WE) of the main buffer 105, and the outgoing number portion thereof connected to a destination outgoing number input (DEST) of an address pointer 104. The data input (DI) and the write address (WA) of the header conversion table 102 are connected to a control system not shown. The data output (DO) of the idle address FIFO 103 is the data input (DI) of the main buffer 105 and connected to the next write address (NWAD) of the address pointer 104. The empty indication output (EPTY) is connected to the write enable input (WE) of the main buffer 105 through the AND gate 109. The write address output (WAD) of the address pointer 104 is connected to the write address input (WA) of the main buffer 105. The read address output (RAD), on the other hand, is connected through a selector 110 to the read address output (RA) of the main buffer 105 and the data input (DI) of the idle address FIFO 103 The portion of the data output (DO) of the main buffer 105 corresponding to the next read address is connected to the next read address input (NRAD) of the address pointer 104, and the other portions thereof, that is, those portions corresponding to the cell body, are separated through the parallel-series conversion multiplex separator 106 into each outgoing line. The output of the control counter 107 is connected to the read counter input (RACNT) of the address pointer 104. The empty address register 111 is connected to the input of the selector 110. The cue state indication output (STS) of the address pointer 104 is connected to both the selection input of the selector 110 and the write enable input (WE) of the idle address FIFO 103 at the same time.

First, the write operation of the cell into the main buffer will be explained.

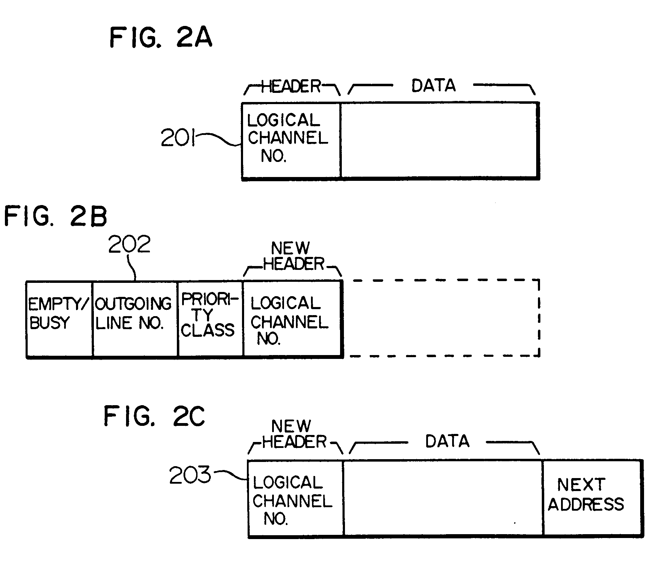

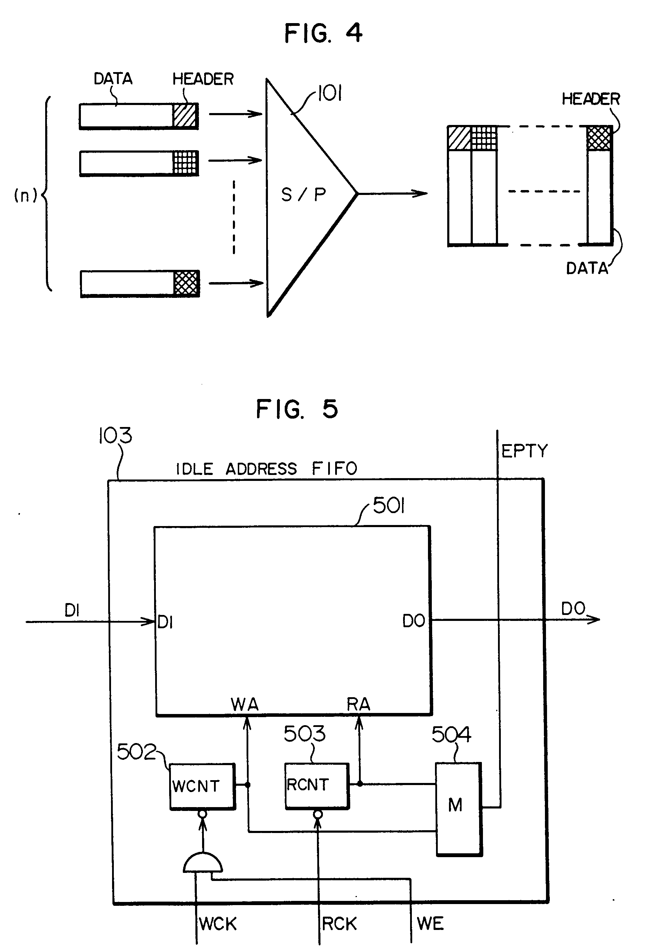

The cells that have arrived from respective incoming lines are subjected to series-to-parallel conversion at the series-parallel conversion multiplexer 101 to facilitate the handling of each cell separately. An example of the construction of the cell arriving from the incoming lines is shown in Fig. 2A, and the concept of the series-parallel conversion multiplexing in Fig. 4. The series-parallel conversion multiplexer is generally made up of a well-known circuit called "the barrel shifter". As shown in Fig. 2A, the cell header carries a logic channel number written thereon, whereby the header conversion table 102 is accessed to obtain the data as to whether the cell of a new logic channel number on the outgoing line side is empty or occupied, and a cell destination outgoing line number. This data is written into the table with the access from the control system at the time of setting a call. Fig. 2B shows an example of the output of the header conversion table 102.

The cell destination outgoing line number is applied to the address pointer 104, and an appropriate write address is obtained accordingly. The write address is applied in advance from the idle address FIFO 103. The cell is written into the main buffer 105 by use of the same write address. If the cell is empty or the idle address FIFO is empty (that is, the main buffer has no empty address), the output of the AND gate 109 is "L", and therefore no data is written in the main buffer 105. At the same time, the read clock (RCK) of the idle address FIFO is also "L", so that no output of the empty address is produced.

Now, the read operation will be explained. The cell is read in such a manner that, in accordance with the number generated by the control counter 107, a read address is obtained from the address pointer 104 and is used as a read address of the main buffer. The value of the control counter corresponds to the outgoing line number. Specifically, cells are read one by one sequentially for each outgoing line. The address used as a read address is applied to the data input (DI) of the idle address FIFO 103 and is used again as a write address. If there is no cell addressed to a given outgoing line in the main buffer, a cue state indication output (STS) is produced, so that an address stored in the empty cell address register 111 is selected as a read address of the main buffer 105 by the selector 110. The data in the main buffer corresponding to this address is always kept as an empty cell.

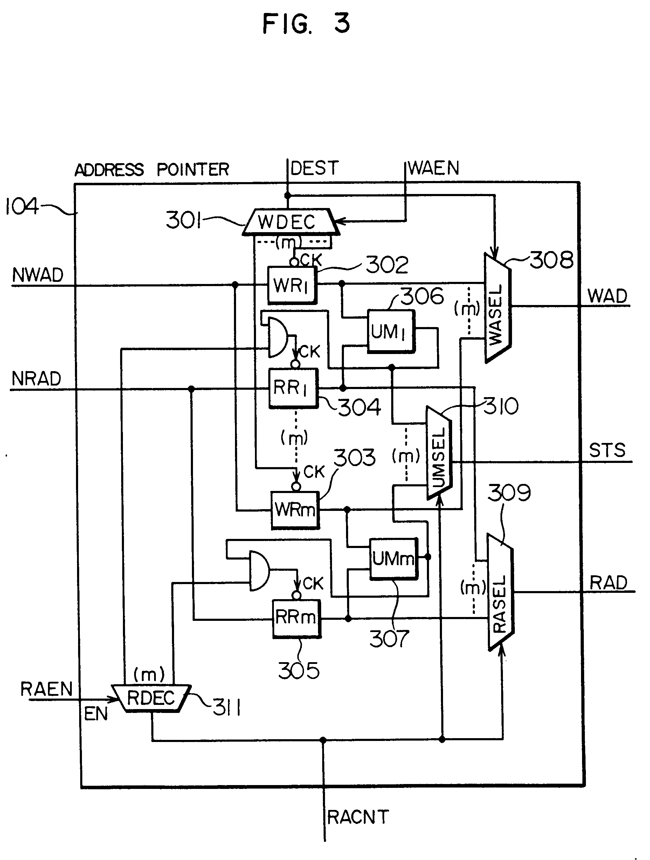

The data output of the idle address FIFO is stored in the main buffer together with the cell. This is to indicate the storage address of the next cell at the same destination as the cell destination outgoing line. A detailed operation will be explained below with reference to Fig. 3. The cell construction in the main buffer is shown in Fig. 2C.

Now, the configuration and operation of the address pointer 104 will be explained with reference to Fig. 3. The outgoing number input (DEST) is connected to the input of the outgoing line number decoder 301 and the selection input of the address selector 308. A number m of decode outputs of the outgoing number decoder 301 are connected respectively to the clock inputs of a number m of write registers (WR_{1 to m}) 302 to 303. The next write address (NWAD), applied from an external idle address FIFO is connected to the input of each write register, and the output of each write register produced as a write address output (WAD) through the write address selector 308. The control counter input (RACNT), on the other hand, is connected to the decoder 311 and the selection input of the read address selector 309. A number m of decode outputs of the decoder 311 are connected as clock inputs of a number m of the read register (RR_{1 to m}) respectively through a gate. The next read address input (NRAD) from an external source is connected to the input of each read register, the output of which makes up a read address (RAD) through the read address selector 309. Non-coincidence detectors 306 to 307 are supplied with outputs of corresponding write register and read register respectively, the outputs of which make up a cue state indication output (STS) through a non-coincidence data selector 130. The outputs of the non-coincidence detectors, on the other hand, are also connected to one of the inputs of the gate.

The portions of a number m of outputs of the write register corresponding to the outgoing lines thereof are selected by the write address selector 308 in response to the outgoing line number input (DEST), thereby to make up an address output (WAD). In the process, a corresponding value held in the write register by the decode output of the outgoing line number decoder 301 is updated to the value (NWAD) supplied from the idle address FIFO. As a result, the NWAD value immediately before being updated corresponds to the write address for the next-arriving cell of the same address as the destination outgoing line number of the cell to be just written. If this NWAD value is stored in the main buffer together with the cell about to be just written, therefore, it is possible to know, when this cell is read out, from which address the next cell destined to the same outgoing line is to be read. In reading a cell, a read register output is selected by a read address selector with the value of the control counter as a selection input, and the value held in the register is produced as a read address output (RAD). This output is thus used as a read address output. At the same time, the value held in the read register selected is updated by the output of the decoder 311. The input of the read register involved is the next read address stored together with the cell at the time of write operation, which is read out of the main buffer, and therefore the address of the next cell destined to the same outgoing line can be held in the read register.

Fig. 5 shows a configuration of the idle address FIFO 103. The idle address FIFO 103 includes a memory 501, a write counter (WCNT) 502, a read counter (RCNT) 503 and a coincidence detector 504. The write counter 502 is a ring counter for producing a write address (WA) and counting the same number as the addresses of the memory 501. The read counter 503 is for producing a read address (RA) and makes up a ring counter for counting the same number as the addresses of the memory 501. When the values of these two counters coincide with each other, it indicates that the memory is empty. This condition is detected by the coincidence detector 504 to produce an empty output (EPTY). In this way, this circuit has the same function as the FIFO as a whole.

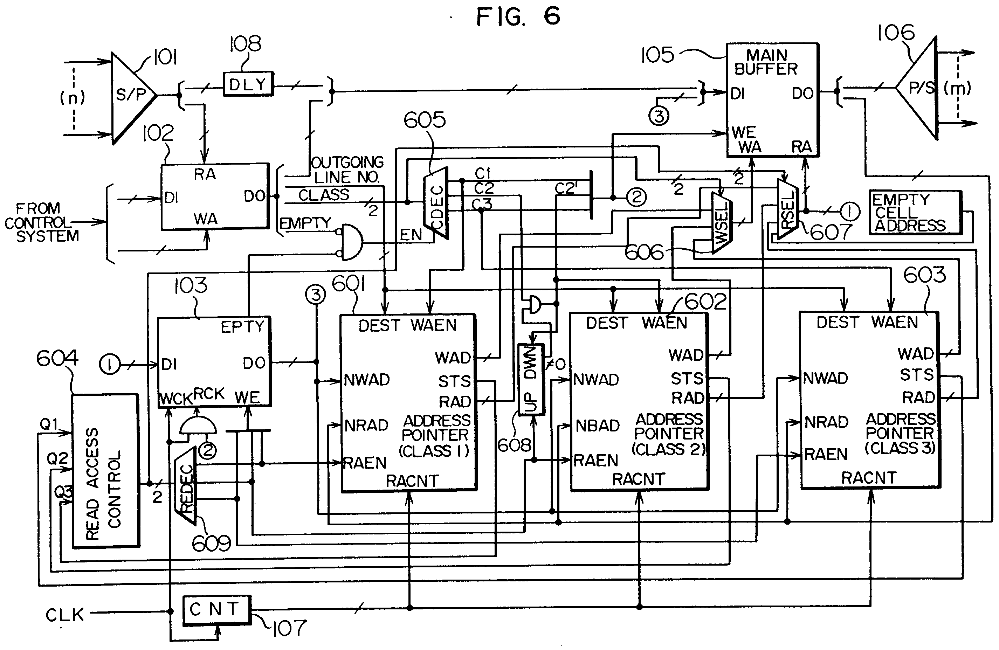

Now, another embodiment of the invention will be explained with reference to Fig. 6. The switching system shown in Fig. 6 operates basically on the same principle as the one shown in Fig. 1. In addition, however, the system in Fig. 6 has a preferential control mechanism. In Fig. 6, the component parts identical to those in Fig. 1 are denoted by the same reference numerals as in Fig. 1, respectively, and will not be described again. The embodiment of Fig. 6 is different from that of Fig. 1 most conspicuously in that the embodiment of Fig. 6 has a plurality of address pointers. It is assumed that there are three preferential classes called class l(Cl), class 2(C2) and class 3(C3).

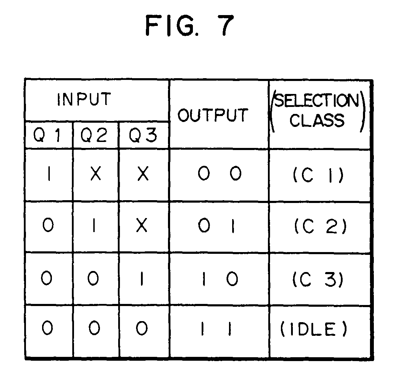

The output of the header conversion table 102 in Fig. 6 includes a class indication. The class indication output is connected to the input of the class decoder (CDEC) 605 and the selection input of the write class selector (WSEL) 606. Each decoder output of the class decoder (CDEC) 605 is connected to the write address enable input (WAEN) of the address pointer of each corresponding class. Of the decoder outputs of the class decoder (CDEC) 605, the output C2 is changed into C2' through an AND gate supplied with the output of the up-down counter 608. The outputs C1, C3 of the class decoder (CDEC) 605 and the OR output of C2' are connected to the write enable (WE) of the main buffer 105. Each cue state indication output (STS) of the address points corresponding to each class including the address pointer (class 1) 601, address pointer (class 2) 602, and the address pointer (class 3) 603 is connected to the input of the read access control 604. The relationship between the input and output of the read access control is shown, for example, in Fig. 7. The output of the read access control 604 is connected to the input of the read class selector (RSEL) 607 and the decoder (REDEC) 609. The decode output of the decoder (REDEC) 609 is connected to the read address enable input (RAEN) of the address pointer of a corresponding class on the one hand, and a logical sum of the decode outputs is connected to the write enable input (WE) of the idle address FIFO on the other hand. The up-down counter 608 is supplied with the read address enable input (RAEN) of class 2 as an up input and C2' as a down input. The classes are so defined that class 1 is small in delay time with a low cell loss rate, class small in delay time with somewhat large cell loss rate, and class 3 somewhat long in delay time with small cell loss rate. Class 2, in spite of a somewhat larger cell loss rate, is superior to other classes, and therefore limits the usable capacity of a main buffer. Specifically, the capacity usable for the up-down counter 608 is set by conversion in the number of cells. The up-down counter 608 is decremented by write and incremented by read when this counter becomes zero, therefore, it indicates that the main buffer is used to the limit. Under this condition, the output C2' becomes "L" and no new write occurs for this class. As a result, the class 2 cell that has arrived is discarded. On the other hand, the read priority order is set by the read access control in such a manner that the class 1 has the least delay time and the class 3 the largest. Specifically, the operation is performed for each outgoing line in such a way that, if the class 1 cell is in the main buffer, it is read in the first place, and when the class 1 cue disappears, the class 2 cell is read out. With the disappearance of the class 2 cue, the class 3 cell is read out.

With the arrival of a cell, the class, to which the particular cell belongs is identifiable by the output of the header conversion table 102, so that the write address enable output (WAEN) is applied to the address pointer corresponding to the particular class by the class decoder 605. The write address output (WAD) produced from the address pointer, on the other hand, is selected by the write class selector (WSEL) 606 and is used as a write address (WA) for the main buffer. In read operation, by contrast, as mentioned earlier, the read access control 604 monitors a waiting cue corresponding to each outgoing line of each class, and effect control to assure that outputs are in the order of priority among the waiting cues. Specifically, the decode output of the decoder 609 designates an address pointer of the class to be read, and the read class selector 607 selects a read address output produced from the address pointer of the class to be read, thus determining the read address of the main buffer.

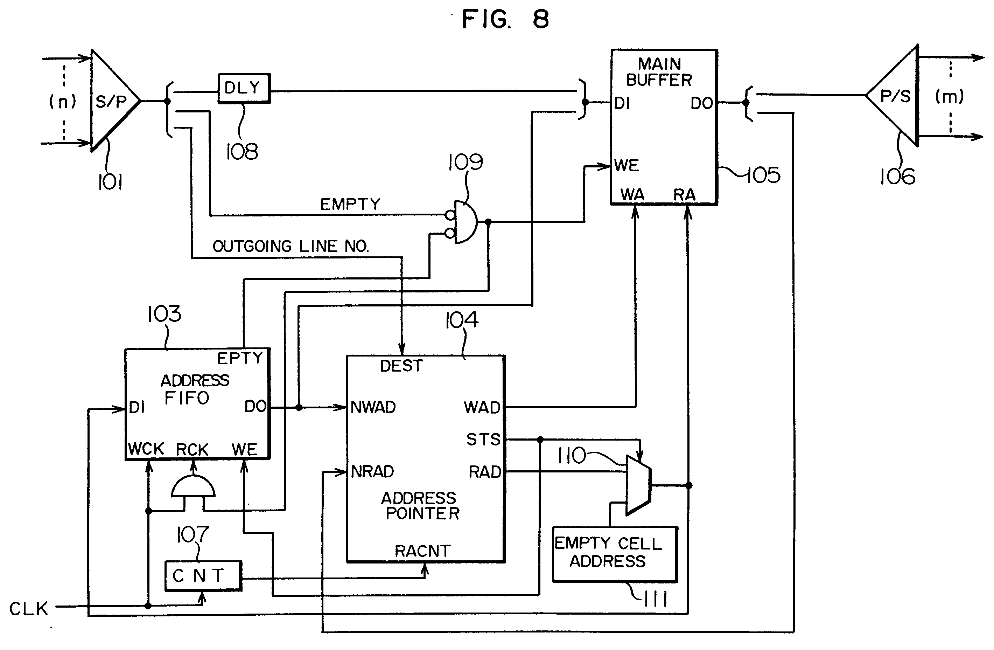

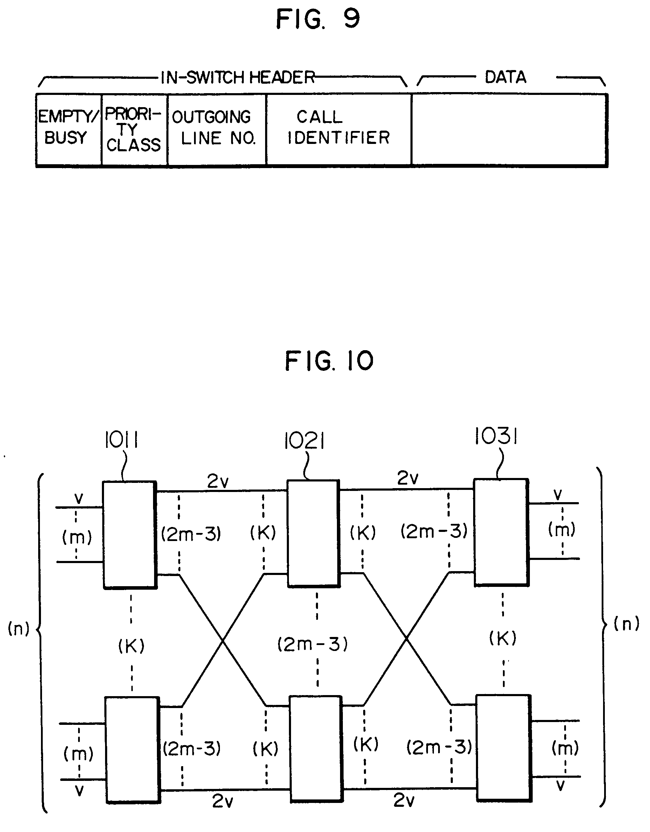

Now, another embodiment of the presentation will be explained with reference to Fig. 8. The configuration of Fig. 8 is free of the header conversion table 102 in Fig. 1. In the case under consideration, the construction of the cell arriving from the incoming line is shown in Fig. 9. This configuration is suitable for the case in which a header conversion table is included for each incoming line in the front stage of the switch. This configuration also has an advantage that, in a multi-stage construction mentioned later, the header conversion may be rendered collectively in advance without respective header conversion by switches in the respective stages.

In each of the embodiments explained above, the main buffer and the idle address FIFO, or the main buffer, idle address FIFO and the address pointer may be formed in integrated circuits on the same chip. Then, a compact switch and a multi-stage construction described later are realized.

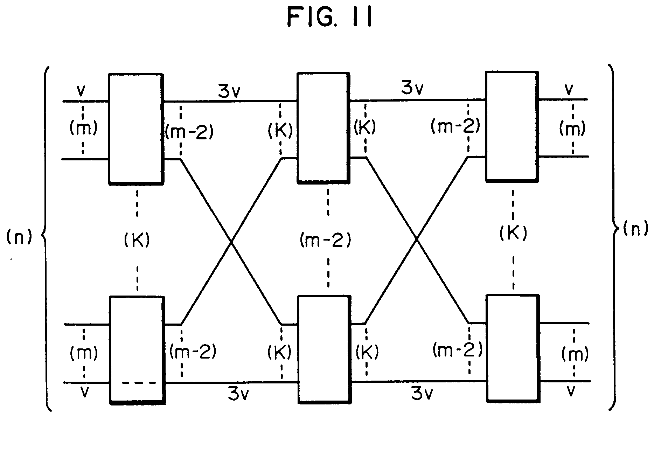

Now, an embodiment of a switch of a multistage construction (multi-stage channel switch) will be explained with reference to Figs. 10 and 11. First, before a specific example, the non-block conditions of a multi-stage switch will be explained.

A conventional non-block multi-channel switch of Clos type is well known for circuit switching (see Akimaru: "Outline of Current Exchange Engineering" published by Ohm, 1979, pp.l36 to 137, and C.Clos: A Study of Non Blocking Networks, Bell System Technical Journal Vol. 32, No. 3 (1953)).

A Clos-type multi-stage switch is assumed to have a number m of incoming lines of a primary switch, a number r of outgoing lines thereof, a number k of the incoming and outgoing lines respectively of a secondary switch, a number r of incoming lines of the tertiary switch and a number m of outgoing lines thereof, a number k of the primary switches, a number r of the secondary switches, and a number k of the tertiary switches, so configured that one each of the r outgoing lines of the primary switch is connected to each of the secondary switches, and one each of the k outgoing lines of the secondary switch to each of the tertiary switches. This multi-stage switch construction thus has three stages to satisfy the relationship r ≥ 2m - 1 (Clos's formula).

The "non-blocking" is defined to indicate that, if both the incoming and outgoing lines of a switch have an empty capacity, there always exists a bus connecting them.

The Clos-type switch is "non-blocking" if it handles a plurality of calls of a single speed. In the case, where each of the calls has a given speed, however, the operating efficiency of the link connecting the unit switches is reduced, and therefore the switch is not "non-blocking". If respective calls are different in speed, a call of low speed may, for example, occupy a part of the link capacity, so that in spite of some empty capacity of the link, a high-speed call may not enter there. Due to this, what is called a "decayed phenomenon", the link operating efficiency is reduced, and therefore a blocking occurs even though Clos's equation may be satisfied.

This problem is solved by increasing the links of the multi-stage switch spatially, that is, by increasing not only the number of the links but also the "timing" thereof with an increased link speed. Specifically, although the number of incoming and outgoing lines and links are assumed to be m and r respectively, a switch configuration is such that, if speed of the incoming and outgoing lines is assumed to be unity, the link speed is x times higher to satisfy the relationship r ≥ 2 x {(m-1)/(x-1)} - 1.

In this equation, (m-l) on the right side indicates the state in which (m-1) of m incoming lines are busy. (x-l), on the other hand, is the link speed ratio x, less the unity representing the incoming line speed ratio, indicating a limit value of Δ → O in a state of (x-l+Δ) where a given link is busy except for a capacity short of a very small amount Δ in a single incoming line in terms of speed.

Thus, 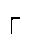 (m-1)/(x-1) indicates the number of links in state that, in spite of a certain empty capacity in the link, a single incoming line cannot be accommodated, that is, a state where each link is used most inefficiently. The symbol [α] indicates a minimum integral number over α. It is thus seen that a number { 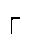 (m-l)/ (x-l) - 1} of links, except for one, are in such a state for both outgoing and incoming lines. Therefore, when the number of links is twice as many, that is, 2 x { 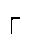 (m-l)/(x-l) - 1}, one new incoming line cannot be accommodated in the links, and if there is another accommodatable link, that is, if the number is 2 x { 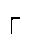 (m-1)/ (x-l) - 1} + 1, both the incoming line side (primary link) and the outgoing line side (secondary link) have a link sharing an empty capacity of at least one channel of incoming line.

Thus, if the number r of the links satisfies the relations r ≥ 2 x { 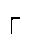 (m-1)/(x-1) - 1} + 1, this switch will never block.

An embodiment of the present invention will be explained below with reference to Fig. 10. As shown in Fig. 10, the number n of incoming and outgoing lines is given as n = mk. A number k of unit switches with a number m of input terminals and a number (2m - 3) of output terminals are arranged as first-stage switches. On the other hand, intermediate-stage switches include a number (2m - 3) unit switches with a number k of input and output terminals, and final-stage switches a number k of unit switches with a number (2m - 3) input terminals and a number m of output terminals. As shown in Fig. 10, the respective unit switches are connected to each other in such a way that the unit switches making up the first-stage switches are connected to all the unit switches of intermediate stage, and those making up the intermediate stage to all the unit switches making up the final stage. In the above-mentioned equation for non-blocking conditions, r ≥ 2 x { 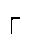 (m-1)/(x-1) - 1} + 1, the embodiment under consideration is associated with a case in which x = 2 and r = 2m - 3, satisfying an equality.

The unit switches in each stage may be made up of those explained with reference to Figs. 6 and 8 or Figs. 12 and 16.

Now, another embodiment of the multi-stage message channel switch is shown in Fig. 11. Unlike in the embodiment of Fig. 10, in which x = 2 and r = 2m - 3 in the above-mentioned equation for non-blocking conditions r ≥ 2 x { 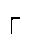 (m-1)/(x-1) - 1} + 1, the embodiment under consideration is associated with a case in which x = 3 and r = m - 2. In this case, too, an equality is satisfied. The same approach to the configuration may apply as in Fig. 10. The configuration of unit switches is also similar to that of the first embodiment in specific points and therefore will not be explained in more detail.

According to these embodiments, a multi-stage switch capable of non-blocking exchange is realized with the required minimum construction requirements.

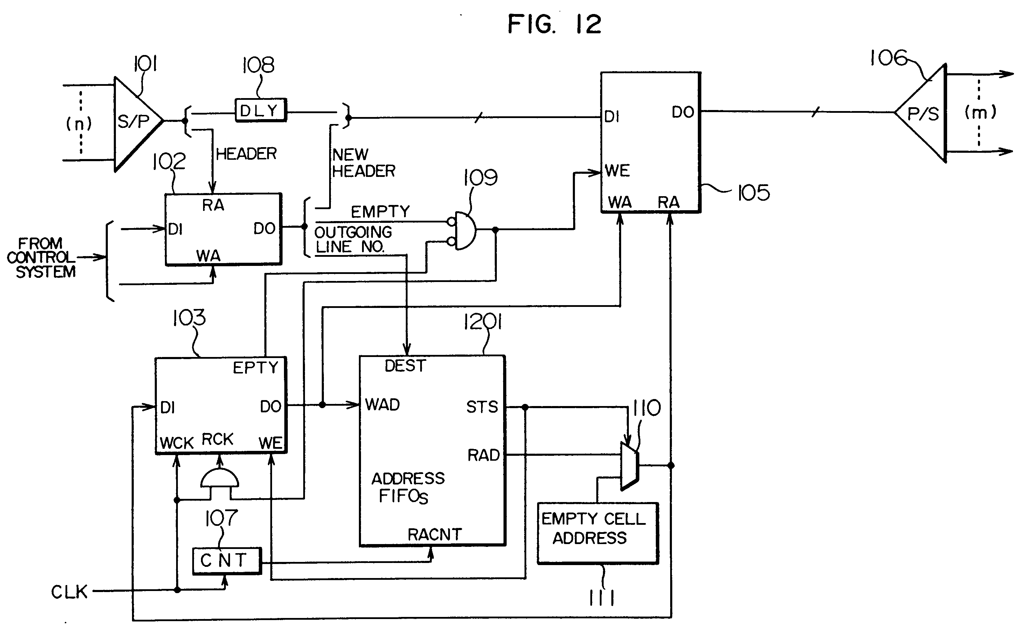

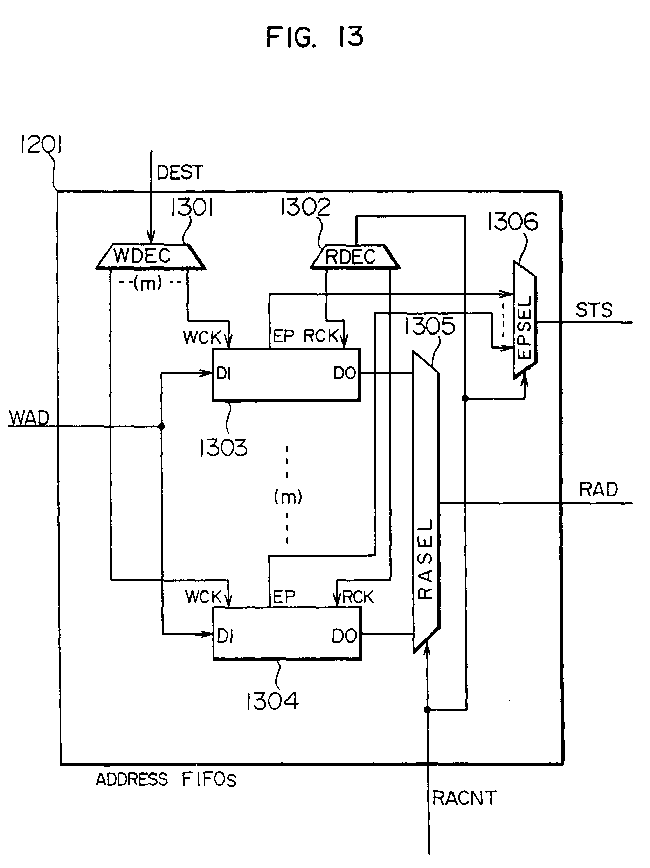

Now, still another embodiment of unit switches will be explained with reference to Fig. 12. In Fig. 12, the configuration is the same as that in Fig. 1, except for address FIFOs 1201, the only difference being in connections. In the embodiment of Fig. 12, the data output (DO) of the idle address FIFO 103 is directly connected to the write address (WA) of the main buffer 105. The main buffer 105 is written only with the cell body, but not with the next address data. The address FIFOs 1201 making up a point of this configuration will be explained with reference to Fig. 13.

The outgoing line number input (DEST) is connected to the outgoing line number decoder (WDEC) 1301, and the m decoder outputs thereof connected to the write signal inputs (WCK) of a number m of FIFO buffers 1303 to 1304. The data input of the FIFO buffers 1303 to 1304 make up the data output of the idle address FIFO in Fig. 12. The data output of the FIFO buffers 1303 to 1304 make up a read address output (RAD) through the read address selector 1305. The read address selector 1305 uses a control counter input (RACNT) as a selection input. The control counter input (RACNT) is further connected to the input of the read sequence decoder 1302 and the selection input of the empty state selector (EPSEL) 1306. The decode output of the read sequence decoder 1302 is connected to the read signal (RCK) input of each FIFO buffer. The empty state signal (EP) of each FIFO buffer makes up a cue state indication output (STS) through empty state selector (EPSEL).

In this embodiment, at the time of writing a cell, an empty address from the idle address FIFO is taken out, and used as the write address of the main buffer as it is. At the same time, the same address is written in the FIFO buffer corresponding to the cell destination outgoing line number in the address FIFOs 1201. At the time of reading, on the other hand, addresses are taken out sequentially from the FIFO buffers, and with these addresses as read addresses, the cells are read out of the main buffer. When the FIFO buffers are empty, an EP output is produced.

In this configuration, the bufferable number of cells for each outgoing line is limited by the capacity of the FIFO buffers in the address FIFOs. If this capacity is set to a sufficiently large value, however, this configuration is simple as a whole.

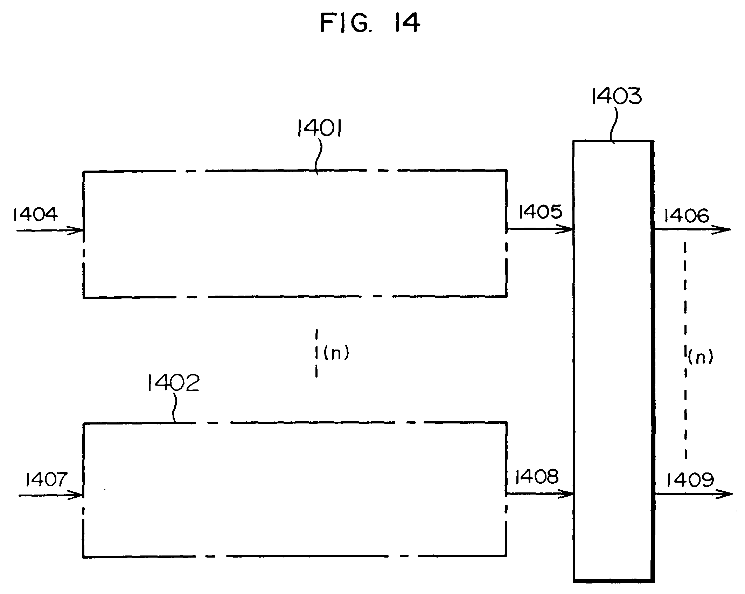

Fig. 14 shows an embodiment of an enlargement of the switch scale. It comprises header drive-type time switches 1401 to 1402 and a header drive-type space switch 1403. The header drive-type time switches 1401 to 1402 correspond to the incoming lines, and each of the outputs thereof is used as an input to the header drive-type space switches.

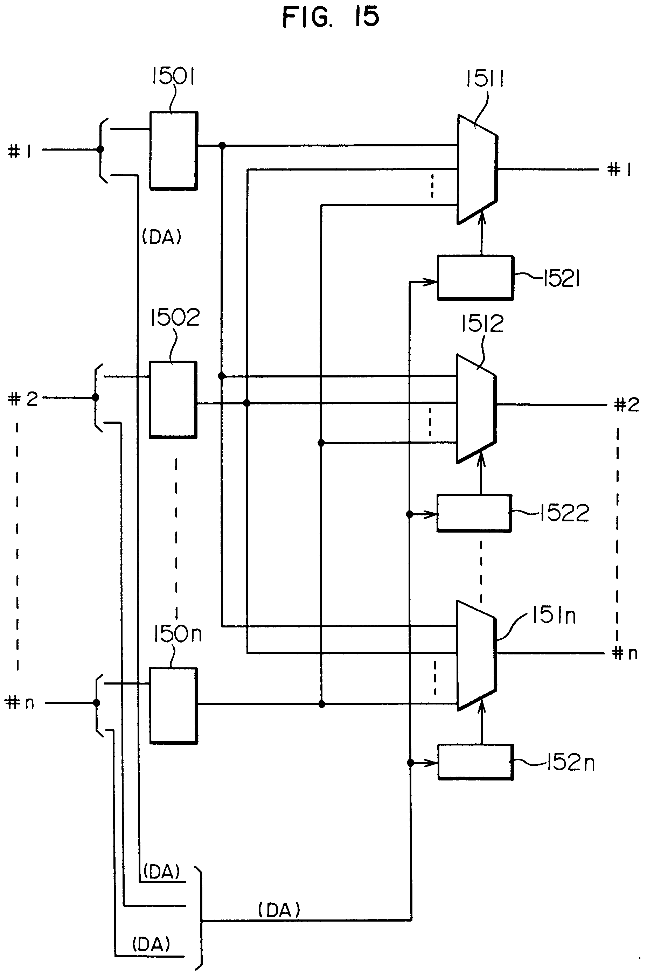

The header drive-type time switch is defined as a switch for replacing the chronological order of cells in accordance with the header data, and specifically, may comprise a switching system shown in Fig. 1, 6, 8 or 12 (except for the multiplexing and multiplex separator) described above. These switching systems depend on the value of the control counter for their cell reading. If the control counters of the n header drive-type time switches in Fig. 14 are set to always different values (for example, by displacing by one for each), therefore, all the cells read at the same time have different destination outgoing line numbers. As a result, in the header drive-type space switch 1403, there occurs no "bump" which otherwise might be caused by the fact that the cells simultaneously applied have the same destination. It is thus possible to make a simple configuration of the header drive-type space switch as shown in Fig. 15. In Fig. 15, timing circuits 1501 to 150n, selectors 1511 to 151n and selection address generators 1521 to 152n are arranged to correspond to the respective outgoing and incoming lines, and the parts of the incoming and outgoing lines associated with the header data have all the incoming lines connected to the selection address generator, and the other parts than the incoming line headers thereof to the selectors corresponding to the respective outgoing lines through the timing circuits respectively. All the destinations of the cells applied at the same time are different from each other, and therefore, each selection address generator is supplied only with one header data with a destination address associated therewith. Upon generation of a selection address corresponding to the incoming line supplied with the particular header data, the selector performs section associated with the destination, thus performing the space switching operation in general.

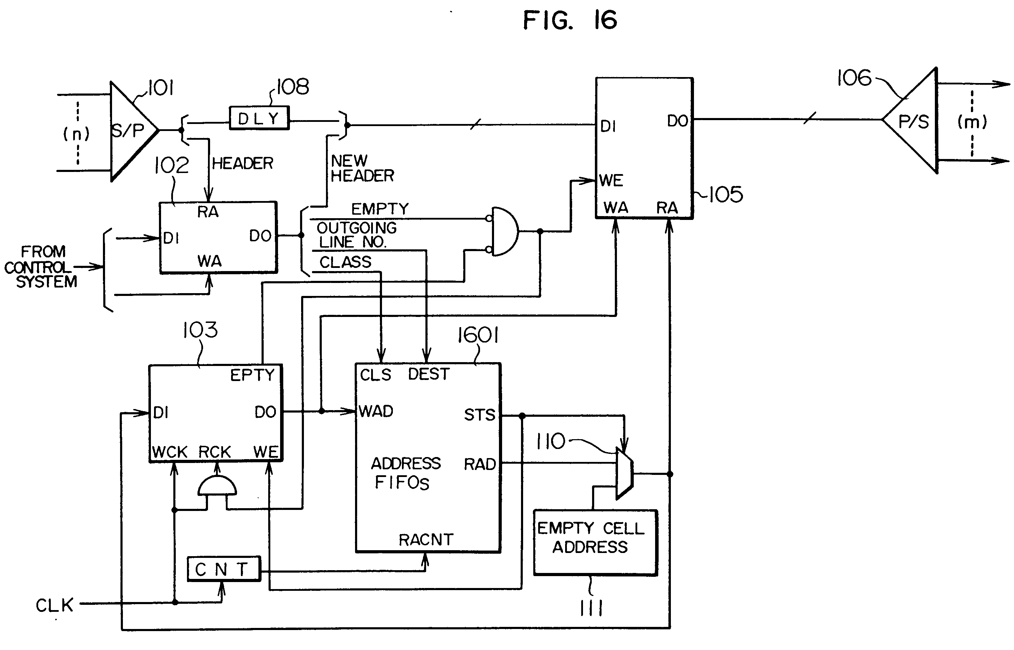

Fig. 16 shows the configuration of Fig. 12 having a preferential control mechanism added thereto. The data output of the header conversion table 102 has a class indication output, which is connected to the class input (CLS) of the address FIFOs 1601.

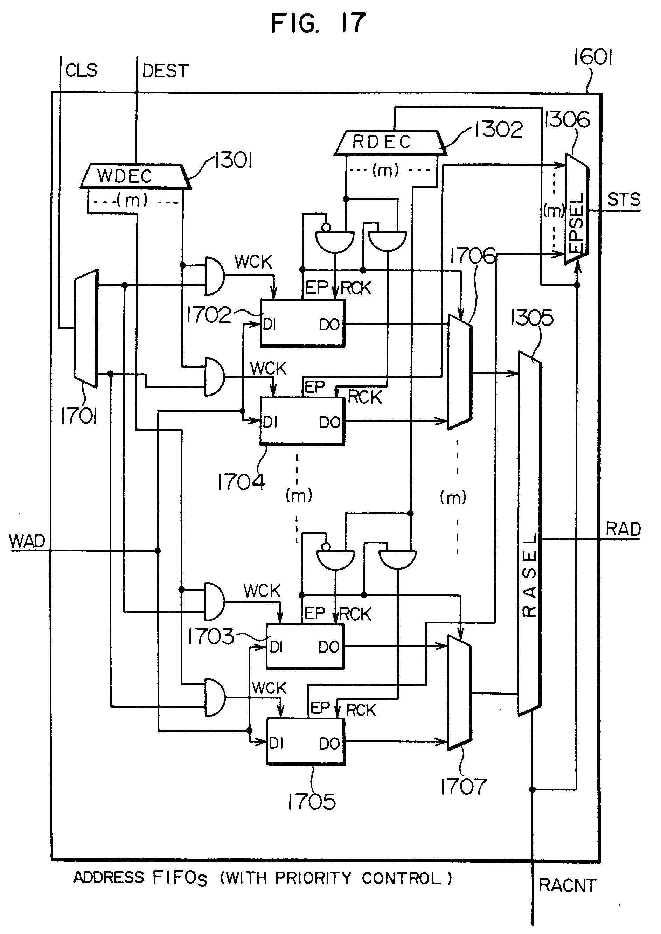

Fig. 17 is a diagram showing a configuration of the address FIFOs with the preferential control function. The component parts included in this diagram, which are similar to those in Fig. 13, are not explained. According to the embodiment under consideration, there are two classes of reading order, preferential and non-preferential. Thus, there are two FIFO buffers (such as 1702 and 1704) for each outgoing line. The write signal input (WCK) of the FIFO buffer is the logical product of the decoder output of the outgoing line number decoder 1301 and that of the class data decoder 1701. The read signal input (RCK), on the other hand, is the logical product of the decode output of the read sequence decoder 1302 and the empty state indication output (EP) of each FIFO. According to this configuration, at the time of writing a cell, the write address (WAD) is stored in a FIFO buffer associated with the outgoing line number and class thereof, while at the time of reading a cell, the read address is always produced from the FIFO on this side until the FIFO on preferential read side (such as 1702) becomes empty. And only after this FIFO becomes empty, the other FIFO (such as 1704) is read.

This embodiment has two classes of order of priority relating to the delay time. Instead, the FIFO buffers may be increased for each class to meet a multiplicity of classes. Also, the requirement for classification according to loss rate may be satisfied by controlling the capacity of the FIFO buffers.

It will thus be understood that, according to the present invention, there occurs no loss of a cell which otherwise might be caused when a new cell is read before a cell is read out of the main buffer. Also, all the areas of the main buffer may be used for all outgoing lines in common, and therefore the memory capacity is usable with high efficiency even if cell destinations are concentrated on a specific outgoing line. As a result, cells are not hardly discarded. This fact is especially advantageous in communications of strong burst characteristic in which cells of the same destinations arrive at a given moment.

## Claims

1. A switching system for switching a fixed-length cell composed of a header section and an information section between a plurality of incoming highways and a plurality of outgoing highways based on information included in the header section of said cell, comprising:
first storage means (105) for storing cells received from said plurality of incoming highways which cells are switched to a destination outgoing highway of said plurality of outgoing highways;
**characterized by**
second storage means (103) for storing information corresponding to an idle address of said first storage means (105); and
a control circuit (104) for controlling the write and read operations of said first storage means corresponding to the information stored in said second storage means:
wherein said control circuit is connected to said first storage means and said second storage means, so that the information corresponding to the idle address of said first storage means is stored in said second storage means based on a read address of the first storage means from said control circuit and the information from said second storage means is outputted as a write address of said first storage means, and is provided with a third storage means (105) for storing the information from said second storage means (103) as a next address for writing a next cell in said first storage means; and
wherein said control circuit inputs said next address to an address corresponding to said write address of said third storage means at time of writing a cell into said first storage means (105) and outputs a read address of said first storage means (105) based on said next address outputted from said third storage means at time of reading a cell from said first storage means.

2. A switching system according to claim 1, wherein said first storage means (105) and said third storage means (105) are arranged in the same memory (105).

3. A switching system for switching a fixed-length cell composed of a header section and an information section between a plurality of incoming highways and a plurality of outgoing highways based on information included in the header section of said cell, comprising:
first storage means (105) for storing cells received from said plurality of incoming highways which cells are switched to a destination outgoing highway of said plurality of outgoing highways;
second storage means (103) for storing information corresponding to an idle address of said first storage means (105); and
a control circuit (104) for controlling the write and read operations of said first storage means corresponding to the information stored in said second storage means:
wherein said control circuit (104) is provided with a third storing means (105) for storing a next address which is the address for writing a next cell into said first storage means and a fourth storage means (302, 304) for storing write addresses and read addresses of said first storage means (105); and
wherein said control circuit (104) writes cells into said third storing means (105) at the address corresponding to the write address outputted by said fourth storage means (302, 304) with the output of said second storage means (103) as a next address, and inputs the output of said second storage means (103) to said fourth storage means (302, 304) as a next write address in the write of a cell and, reads the cell from said third storage means (105) at an address corresponding to the read address outputted by the fourth storage means (302, 304) and also returns said read address to said second storage means (103) in the read of a cell, and inputs said next address outputted by said third storage means (105) to said fourth storage means (302, 304) as a read address and controls the write and read operations of said first storage means (105).

4. A switching system according to claim 3, wherein said first storage means (105) and said third storage means (105) are arranged in the same memory (105).

5. A switching system according to claim 4, wherein said fourth storage means (302) of said control means (104) is a write register (302) and a read register (304) of the number of outgoing highways corresponding to each outgoing highway, and said control means (104) is provided with means (301) for distributing data outputs of said second storage means (103) among write registers (302, 303) corresponding to a destination highway of said cell and selection means (309) for selecting said read register (304) by a predetermined rule and outputting a read address of said first storage means (105).

6. A switching system for switching a fixed-length cell composed of a header section and an information section between a plurality of incoming highways and a plurality of outgoing highways based on information included in the header section of said cell, comprising:
first storage means (105) for storing cells received from said plurality of incoming highways and switching said cells to a destination outgoing highway of said plurality of outgoing highways;
second storage means (103) for storing information corresponding to an idle address of said first storage means; and
a control circuit (104) for controlling the write operations of said first storage means corresponding to the information stored in said second storage means;
wherein said control means is further provided with means for writing said received cell at an address corresponding to the write address of said received cell of said first storage means (105) with the idle address outputted by said second storage means (103) as a next address and means (302) for storing said idle address for a next arriving cell as a write address for storing the next arriving cell in said first storage means (105).

7. A switching system according to claim 6, wherein said control means is provided with further means (304) for storing a next address which is read out of said first storage means (105) at time of reading a cell stored in said first storage means (105) and means for reading another cell having the same destination stored in said first storage means at a next address stored in said means for storing the next address.

8. A switching system according to claim 7, wherein said control means (104) further returns the address stored in said further means (304) for storing to said second storage means (103) when another cell having the same destination stored in said first storage means (105) is read out.
